# FASCICULE DE BREVET EUROPEEN

(11) **EP 2 197 808 B1**
(45) Date de publication et mention de la délivrance du brevet: **04.11.2020**
(21) Numéro de dépôt: 08836295.9
(22) Date de dépôt: 04.09.2008
(51) Int. Cl.: C03C 25/26

(54) **COMPOSITION D'ENSIMAGE SOUS FORME DE GEL PHYSIQUE POUR FILS DE VERRE, FILS DE VERRE OBTENUS ET COMPOSITES COMPRENANT LESDITS FILS**
ÖLZUSAMMENSETZUNG IN FORM EINES PHYSIKALISCHEN GELS FÜR GLASGARNE, AUS IHR GEWONNENE GLASGARNE UND VERBUNDSTOFFE MIT DIESEN GARNEN
OILING COMPOSITION IN THE FORM OF A PHYSICAL GEL FOR GLASS YARNS, GLASS YARNS THUS OBTAINED AND COMPOSITES CONTAINING SAID YARNS

(30) Priorité: 06.09.2007 FR 0757377
(43) Date de publication de la demande: 23.06.2010
(73) Titulaire: OCV Intellectual Capital, LLC, Toledo, OH 43659 (US)
(72) Inventeur: SERRUGHETTI, Dominique, F-75014 Paris (FR); DENIS, Jean-Baptiste, 92270 Bois Colombes (FR); MOIREAU, Patrick, F-73190 Curienne (FR)
(74) Mandataire: Haseltine Lake Kempner LLP
(86) Numéro de dépôt international: PCT/FR2008/051572
(87) Numéro de publication internationale: WO 2009/044042

(56) Documents cités:
- WO-A-03/006532
- FR-A- 2 895 398
- US-A- 3 837 898
- US-A- 4 065 417
- Katsuyoshi Nishinari ET AL: "Interaction in polysaccharide solutions and gels", CURRENT OPINION IN COLLOID AND INTERFACE SCIENCE, vol. 8, no. 4-5, 1 November 2003 (2003-11-01), pages 396-400, XP055371237, GB ISSN: 1359-0294, DOI: 10.1016/S1359-0294(03)00099-2

## Description

La présente invention concerne une composition d'ensimage pour fils de verre, notamment destinés à renforcer des matrices organiques et/ou inorganiques, les fils de verre obtenus ainsi que les composites incorporant lesdits fils de verre. Plus précisément, elle a trait à une composition d'ensimage aqueuse qui se présente sous la forme d'un gel physique ayant un comportement rhéologique du type thixotropique.

De manière classique, les fils de verre de renforcement sont élaborés par étirage mécanique de filets de verre fondu s'écoulant par gravité des multiples orifices de filières remplies de verre en fusion, pour former des filaments qui sont rassemblés en fils de base, lesquels fils sont alors collectés.

Au cours de l'étirage, et avant leur rassemblement en fils, les filaments de verre sont revêtus d'une composition d'ensimage, généralement aqueuse, par passage sur un organe ensimeur.

Le rôle de l'ensimage est essentiel à double titre.

Lors de la fabrication des fils, l'ensimage protège les filaments de l'abrasion résultant du frottement de ces derniers à grande vitesse sur les organes du procédé en agissant comme lubrifiant. Il permet aussi d'éliminer les charges électrostatiques générées lors de ce frottement. Enfin, il donne de la cohésion au fil en assurant la liaison des filaments entre eux.

Lors de l'utilisation en vue de réaliser des matériaux composites, l'ensimage améliore le mouillage du verre et l'imprégnation du fil par la matière à renforcer, et il favorise l'adhésion entre le verre et ladite matière, conduisant ainsi à des matériaux composites ayant des propriétés mécaniques améliorées.

Les fils de verre sous leurs différentes formes (fils continus, coupés ou broyés, mats de fils continus ou coupés, grilles, tissus, tricots, ....) sont utilisés couramment pour renforcer efficacement des matrices de nature variée, par exemple des matières thermoplastiques ou thermodurcissables et du ciment.

Les compositions d'ensimage les plus couramment employées sont des compositions aqueuses, en particulier des compositions d'ensimage dites « plastiques » renfermant un agent filmogène du type polymère qui présente notamment l'avantage de donner de la cohésion mécanique à l'ensimage final et de protéger les fils contre les endommagements mécaniques et les agressions chimiques et environnementales.

Ces compositions d'ensimage sont constituées à plus de 80 % en poids d'eau et par conséquent ont une viscosité faible, généralement au plus égale à 5 mPa.s, qui permet de pouvoir les déposer facilement avec des dispositifs ensimeurs relativement simples, par exemple au moyen d'un rouleau ensimeur sur lequel les filaments de verre passent à vitesse élevée. Les conditions du procédé sont adaptées pour que la quantité d'ensimage voulue soit déposée lors du passage du fil sur le dispositif ensimeur.

La présence d'eau en quantité aussi importante dans la composition d'ensimage présente cependant des inconvénients.

Du fait qu'elle est peu visqueuse, la composition d'ensimage n'a pas une bonne tenue sur le verre quand le fil entre en contact avec les différents éléments qui servent à le guider jusqu'au bobinoir. Un phénomène d'essorage se produit, suivi d'une projection centrifuge de l'ensimage sous l'effet de la vitesse d'étirage. Une partie de la composition d'ensimage est également perdue sous l'effet de la force centrifuge lors du bobinage du fil. La perte peut aller jusqu'à 50 % selon les compositions d'ensimage.

Par ailleurs, l'eau est préjudiciable aux propriétés mécaniques du composite final car elle diminue l'adhérence entre les fils de verre et la matière à renforcer. L'eau doit par conséquent être éliminée, ce qui se fait traditionnellement en séchant les enroulements de fils dans une enceinte de grande dimension chauffée à une température de l'ordre de 100 à 150°C pendant 10 à 20 heures selon la masse de l'enroulement et sa teneur initiale en eau. Outre le fait qu'elle est coûteuse et longue, l'opération de séchage provoque une migration sélective des constituants de l'ensimage en fonction de leur affinité pour l'eau et de leur poids moléculaire, essentiellement de l'intérieur vers l'extérieur de l'enroulement, et une augmentation importante de la quantité d'ensimage (jusqu'à 800 %) sur le fil situé en périphérie par rapport au centre de l'enroulement. Du fait de cette variation, les propriétés du fil ne sont pas constantes sur toute la longueur de l'enroulement qui se traduisent notamment par des problèmes de mise en œuvre dans des opérations de tissage et l'apparition de défauts d'imprégnation (« points blancs » ou « spots » en anglais) dans les composites à matrice organique.

Un moyen de palier cet inconvénient consiste à « éplucher » l'enroulement en retirant une certaine longueur de fil situé en périphérie pour ne conserver que la partie de fil contenant la quantité d'ensimage requise. En règle générale, on considère que les propriétés du fil sont acceptables si le rapport de la teneur maximale en ensimage sur le fil dans l'enroulement à la teneur nominale de l'ensimage est au plus égal à 2. Au-delà de cette valeur, la qualité du fil n'est pas satisfaisante pour les applications visées (apparition des défauts cités au paragraphe précédent). La quantité de fil à éliminer pour que ce rapport soit satisfait représente généralement 2 à 5 % du poids de l'enroulement. Cette opération est coûteuse car elle requiert des installations spécifiques et des opérateurs supplémentaires.

Le même phénomène de migration de l'ensimage est observé sur les enroulements à flancs droits tels que les stratifils (« rovings » en anglais), par exemple obtenus par bobinage du fil directement sous la filière. Mais dans ce cas, l'ensimage migre à la fois vers la périphérie et les flancs de l'enroulement. De ce fait, la solution d'épluchage précitée ne peut pas s'appliquer.

Dans le but d'améliorer l'application de l'ensimage sur les fibres de verre, le document US 4 065 417 A décrit notamment une composition d'ensimage constituée d'un agent filmogène tel qu'un époxy, d'un agent tensio-actif tel que l'isooctyl phényl polyéthoxy éthanol, d'un agent de couplage tel qu'un silane, d'un agent lubrifiant tel qu'un polysiloxane et d'un agent texturant tel qu'un polyacrylamide réticulé avec de l'époxy.

La présente invention a pour but de limiter la migration de l'ensimage lors du séchage des enroulements.

Ce but est atteint selon l'invention par une composition d'ensimage pour fils de verre qui comprend un agent texturant apte à conférer à ladite composition l'aspect d'un gel physique.

L'invention a également pour objet les fils de verre revêtus de la composition d'ensimage précités.

L'invention a encore pour objet les matériaux composites comprenant une matrice organique et/ou inorganique renforcée par les fils de verre conformes à l'invention.

Plus précisément, l'invention a pour objet une composition aqueuse d'ensimage sous forme de gel physique, présentant une teneur en matières solides (extrait sec) variant de 5 à 10 % et comprenant (en % en poids) :
- 0,15 à 2 % d'au moins un agent texturant choisi parmi les xanthanes, les guars et les succinoglycans,
- 2 à 8 % d'au moins un agent filmogène choisi parmi les polyacétates de vinyle, les polyesters, les polyéthers, les epoxy, les polyacryliques et les polyuréthanes.
- 0,1 à 8 % d'au moins un composé choisi dans le groupe constitué par les agents plastifiants, les agents tensio-actifs et les agents dispersants,
- 0,1 à 4 % d'au moins un agent de couplage choisi parmi les composés hydrolysables appartenant au groupe constitué par les silanes, les titanates et les zirconates,
- 0 à 6 % d'au moins un additif.

La composition d'ensimage conforme à l'invention se présente sous la forme d'un gel physique ayant un comportement rhéologique du type thixotropique.

Par « gel physique » on entend un système comprenant un composé susceptible de s'organiser sous la forme d'une phase solide finement dispersée dans une phase liquide, majoritaire, et former un réseau de densité faible et facile à déstructurer grâce à la présence de liaisons faibles, ce réseau étant réversible.

Par « comportement thixotropique » on entend l'ensemble des mécanismes qui font qu'un fluide voit sa viscosité diminuer lorsqu'il est soumis à une augmentation de la contrainte de cisaillement, et retrouve le niveau de viscosité initial quand ladite contrainte cesse.

Le gel physique conforme à l'invention a la capacité de se transformer en un liquide de faible viscosité, en général inférieure à 100 mPa.s, lorsqu'il est soumis à un cisaillement de l'ordre de 1 x 10⁶ s⁻¹ correspondant au passage des filaments de verre au niveau du dispositif d'ensimage.

L'état de gel physique de la composition d'ensimage selon l'invention est obtenu en ajoutant au moins un agent texturant dans la composition d'ensimage, cet agent texturant étant choisi parmi des polymères spécifiques qui se caractérisent en ce qu'ils contiennent une proportion élevée de groupements fonctionnels hydroxyles.

L'agent texturant conforme à l'invention est choisi parmi les les xanthanes et les succinoglycans, en particulier présentant un poids moléculaire moyen supérieur à 100000, de préférence inférieure à 10 x 10⁶ et avantageusement inférieur à 5 x 10⁶. Avantageusement, le xanthane répond à la formule (I) de la Figure 1 dans laquelle :
M⁺ = Na, K ou ½ Ca
R₁ = H ou - COCH₃
avec R₂, R₃ = H ou 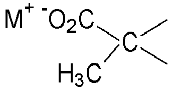 ou
   R₂ = H et R₃ = -COCH₃
n ≥ 100.

Avantageusement, le succinoglycan répond à la formule (II) de la Figure 1 dans laquelle :
Ac = - CO - CH₃
Suc = - CO - (CH₂)₂ - COOH
M⁺ = Na, K ou ½ Ca
n ≥ 80.

De préférence, la teneur en agent texturant est inférieure à 0,6 % en poids de la composition d'ensimage.

L'agent filmogène polymérique joue plusieurs rôles : il permet de protéger les filaments de verre de l'abrasion au cours de l'étirage, d'une part, et le fil des agressions chimiques et environnementales, d'autre part ; il confère de l'intégrité au fil ; enfin, il améliore la compatibilité de la composition d'ensimage avec la matrice à renforcer.

Le choix de l'agent filmogène dépend en grande partie de la nature chimique de la matière à renforcer.

L'agent filmogène est choisi selon l'invention parmi les polyacétates de vinyle, les polyesters, les polyéthers, les epoxy, les polyacryliques et les polyuréthanes. L'agent filmogène peut être choisi en particulier parmi les homopolymères ou copolymères de polyacétates de vinyle, par exemple les copolymères d'acétate de vinyle et d'éthylène et les homopolymères ou copolymères de polyacryliques. Les polyacétates de vinyle, les epoxy et les polyéthylène glycols de masse supérieure ou égale à 20000 sont préférés.

L'agent filmogène est généralement introduit dans la composition d'ensimage sous la forme d'une émulsion.

De préférence, la teneur en agent filmogène varie de 2,5 à 7 % en poids de la composition d'ensimage.

La composition d'ensimage comprend au moins un composé choisi dans le groupe constitué par les agents plastifiants, les agents tensio-actifs et les agents dispersants dont le rôle est de favoriser la mise en suspension et de permettre une dispersion homogène des différents constituants de la composition en évitant les problèmes de séparation des phases liquides, et d'assurer un mouillage efficace et rapide des fils par la matière à renforcer lors de la fabrication des composites. Les agents plastifiants, tensio-actifs et dispersants possèdent souvent plusieurs fonctions et de ce fait leur classement dans l'une ou l'autre des catégories précitées est difficile.

Le groupe constitué par les agents plastifiants, les agents tensio-actifs et les agents dispersants comprend :
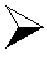 les composés organiques, notamment
   - les composés polyalkoxylés, aliphatiques ou aromatiques, éventuellement halogénés, tels que les alkyphénols éthoxylés/propoxylés, de préférence renfermant 1 à 30 groupes oxyde d'éthylène et 0 à 15 groupes oxyde de propylène, les bisphénols éthoxylés/propoxylés, de préférence renfermant 1 à 40 groupes oxyde d'éthylène et 0 à 20 groupes oxyde de propylène, les alcools gras éthoxylés/propoxylés, de préférence dont la chaîne alkyle comprend 8 à 20 atomes de carbone et renfermant 2 à 50 groupes oxyde d'éthylène et jusqu'à 20 groupes oxyde de propylène. Ces composés polyalkoxylés peuvent être des copolymères blocs ou statistiques,
   - les esters d'acide gras polyalkoxylés, par exemple de polyéthylèneglycol, de préférence dont la chaîne alkyle comprend 8 à 20 atomes de carbone et renfermant 2 à 50 groupes oxyde d'éthylène et jusqu'à 20 groupes oxyde de propylène,
   - les composés aminés, par exemple les amines, éventuellement alkoxylées, les oxydes d'amine, les alkylamides, les succinates et les taurates de sodium, de potassium ou d'ammonium, les dérivés de sucres notamment du sorbitan, les alkylsulfates, éventuellement alkoxylés, les alkylphosphates et les éther phosphates de sodium, de potassium ou d'ammonium, éventuellement alkylés ou alkoxylés.
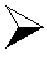 Les composés inorganiques, par exemple des dérivés de la silice, ces composés pouvant être utilisés seuls ou en mélange avec les composés organiques précités.

La quantité de composé choisi dans le groupe précité varie de préférence de 0,15 à 4 % en poids de la composition d'ensimage.

L'agent de couplage permet d'assurer l'accrochage de l'ensimage à la surface du verre.

L'agent de couplage est choisi parmi les composés hydrolysables, notamment en présence d'un acide tel que l'acide acétique, lactique ou citrique, qui appartiennent au groupe constitué par les silanes tels que le gamma-glycidoxypropyltriméthoxysilane, le gamma-acryloxypropyltriméthoxysilane, le gamma-méthacryloxypropyltriméthoxysilane, le poly(oxyéthylène/oxypropylène)-triméthoxysilane, le gamma-aminopropyltriéthoxysilane, le vinyltriméthoxysilane, le phénylaminopropyltriméthoxysilane, le styrylaminoéthylaminopropyltriméthoxysilane et le terbutylcarbamoylpropyltriméthoxysilane, les siloxanes tels que le 1,3-divinyltétraéthoxydisiloxane, les titanates, les zirconates, notamment d'aluminium, et les mélanges de ces composés. De préférence, on choisit les silanes.

La quantité d'agent de couplage varie de préférence de 0,15 à 2 % en poids de la composition d'ensimage.

En plus des constituants précités qui participent essentiellement à la structure de l'ensimage, un ou plusieurs autres constituants peuvent être ajoutés en tant qu'additifs.

On peut ainsi introduire au moins un agent lubrifiant tel qu'un ester d'acide gras, éventuellement alkoxylé, par exemple le laurate de décyle, le palmitate d'isopropyle, le palmitate de cétyle, le stéarate d'isopropyle, le stéarate de butyle ou d'isobutyle, le trioctanoate de triméthylolpropane et le tridécanoate de triméthylolpropane, un dérivé d'alkylphénol, par exemple l'octylphénol éthoxylé, un alcool gras, éventuellement alkoxylé, par exemple le laurate ou le stéarate de polyéthylèneglycol à terminaisons méthyle, comportant avantageusement moins de 10 motifs oxyéthylène, un mélange à base d'huile minérale, une alkylamine, une cire de polyéthylène et un mélange de ces composés.

On peut encore ajouter au moins un des additifs suivants : agent complexant tel qu'un dérivé de l'EDTA, dérivé de l'acide gallique ou de l'acide phosphonique, agent anti-mousse tel qu'un silicone, un polyol et une huile végétale, et un acide servant à contrôler le pH lors de l'hydrolyse de l'agent de couplage, par exemple l'acide acétique, lactique ou citrique.

La composition d'ensimage peut encore comprendre au moins un composé qui permet de contrôler la quantité de groupes hydroxyles libres contenus dans l'ensimage après l'étape de séchage du fil afin d'avoir un faible caractère hydrophile, ce qui permet de conserver une bonne résistance au vieillissement en milieu humide.

Ce composé est choisi parmi les epoxy et les isocyanates bloqués thermiquement activables, de préférence mono- ou difonctionnels, ayant un poids moléculaire inférieur à 1000, de préférence inférieur à 700.

Les epoxy sont choisis parmi les epoxy aliphatiques tels que le butylglycidyléther, le butanediol1,4-diglycidyléther et les diglycidyléther de polyoxyéthylène contenant au plus 4 motifs oxyde d'éthylène, cycloaliphatiques tels que le cyclohexanediméthanoldiglycidyléther, aromatiques tels que le phényl diglycidyléther.

Les isocyanates bloqués pouvant être activés par voie thermique sont choisis parmi les isocyanates renfermant un ou plusieurs groupes N-oxime, N-caprolactame et furfural. La température de déblocage doit correspondre à la température de séchage du fil, généralement entre 105 et 140°C.

Le composé qui permet de contrôler la quantité de groupes hydroxyles libres peut encore être choisi parmi les acides organiques présentant au moins deux groupes fonctionnels carboxyles, par exemple l'acide adipique, l'acide citrique, les poly(acide acrylique) et les poly(acide méthacrylique). De manière générale, ces acides présentent un poids moléculaire inférieur à 1000, de préférence inférieur à 500.

De manière avantageuse, un catalyseur du type amine tertiaire est associé à l'epoxy ou à l'isocyanate. Le catalyseur peut être choisi parmi les composés connus, par exemple les phénols substitués tels que le tris(diméthylaminométhyl)phénol et les imidazolines telles que la N-stéarylimidazoline ou leurs dérivés,

La quantité de catalyseur n'excède pas 1 % en poids de la composition d'ensimage.

De préférence, la teneur totale en additifs dans la composition d'ensimage n'excède pas 3 %.

La quantité d'eau à utiliser pour former la composition d'ensimage est déterminée de manière à obtenir une teneur en matières solides (extrait sec) qui varie de 5 à 10 %.

La préparation de la composition d'ensimage comprend les étapes suivantes consistant à :
a) hydrolyser l'(les) agent(s) de couplage, le cas échéant,
b) mélanger l'(les) agent(s) de couplage, l'agent filmogène, le composé choisi dans le groupe constitué par les agents plastifiants, les agents tensio-actifs et les agents dispersants, éventuellement des additifs, et l'eau,
c) ajouter l'agent texturant, de préférence sous agitation vigoureuse,
d) appliquer au mélange obtenu une force de cisaillement suffisante pour former un gel homogène.

L'invention a également pour objet les fils de verre revêtus de la composition d'ensimage précitée.

Dans la présente invention, par « fils » on entend les fils de base issus du rassemblement sous la filière d'une multitude de filaments, et les produits dérivés de ces fils, notamment les assemblages de ces fils en stratifils. De tels assemblages peuvent être obtenus en dévidant simultanément plusieurs enroulements de fils de base, puis en les rassemblant en mèches qui sont bobinées sur un support en rotation. Ce peut être également des stratifils « directs » de titre (ou de masse linéique) équivalent à celui des stratifils assemblés, obtenus par le rassemblement de filaments directement sous la filière, et enroulement sur un support en rotation.

Comme mentionné précédemment, la composition d'ensimage aqueuse est déposée sur les filaments avant leur rassemblement en fil(s) de base. L'eau est usuellement évacuée par séchage des fils après la collecte dans des conditions de température et de durée permettant d'atteindre une teneur en eau inférieure à 0,25 %, de préférence inférieure à 0,1 %. Le plus souvent, le séchage est effectué à une température qui varie de 100 à 150°C pendant 10 à 20 heures selon le type d'enroulement et la teneur en eau initiale.

Le fil ensimé conforme à l'invention peut être en verre de toute sorte, par exemple E, C, R, AR et à taux de bore réduit (inférieur à 6 %). Les verres E et AR sont préférés.

Le diamètre des filaments de verre constituant les fils peut varier dans une large mesure, par exemple de 5 à 30 µm. De la même manière, la masse linéique du fil peut varier largement, de 11 à 4800 tex selon les applications visées.

En règle générale, la quantité d'ensimage représente 0,2 à 5 % en poids du fil final, de préférence 0,35 à 3 %.

L'invention a encore pour objet un matériau composite associant au moins une matière organique et/ou inorganique et des fils de verre revêtus de la composition d'ensimage précédemment décrite. La matière organique peut être constituée d'un ou plusieurs polymères thermoplastiques ou thermodurcissables, et la matière inorganique peut être par exemple une matière cimentaire.

Le taux de verre au sein du matériau composite est généralement compris entre 5 et 60 % en poids.

Les exemples donnés ci-après permettent d'illustrer l'invention sans toutefois la limiter.

Dans ces exemples, on utilise les méthodes suivantes :

### Composition d'ensimage

### 1 - préparation

a) on réalise l'hydrolyse de l'agent de couplage en l'introduisant dans un large volume d'eau (pH environ 10-12 ; Silquest® A1100 et A1120), le cas échéant acidifiée par un acide, par exemple l'acide acétique, l'acide citrique ou l'acide lactique (pH 3,5-5 ; Silquest® A174, A1128, A1387 et A187). Le mélange est maintenu sous agitation à la température ambiante pendant environ 20 minutes.
b) on mélange les silanes, le cas échéant, et, sous une agitation modérée, on ajoute successivement, dans la solution d'agent(s) de couplage, l'agent filmogène, les additifs (agents lubrifiant, tensioactif, plastifiant, catalyseur) et de l'eau en quantité désirée pour obtenir le taux de matières solides souhaité, en tenant compte de la quantité d'agent texturant à introduire.
c) on ajoute lentement l'agent texturant au mélange de l'étape b) sous une forte agitation. Dès l'apparition d'un gel, on applique un traitement cisaillant, par exemple au moyen d'un Ultraturrax® (5000-9000 rpm) pendant 3 à 5 minutes. Le gel se déstructure en un liquide de faible viscosité sous l'effet du cisaillement mécanique, ce qui permet d'homogénéiser le mélange, puis il se reforme rapidement après l'arrêt de l'agitation.

### 2 - constituants

### - agents filmogènes

▪ AMP 90 commercialisé par la société ANGUS CHEMIE GmbH : 2-amino-2-méthylpropanol
▪ POLYFINISH 40H commercialisé par la société ACHITEX : émulsion aqueuse de polypropylène greffé par de l'anhydride maléique ; teneur en matières solides : 40 %
▪ VINAMUL® 8828 commercialisé par la société CELANESE : émulsion aqueuse de polymère à base d'acétate de vinyle et de N-méthylolacrylamide ; teneur en matières solides : 52 %
▪ VINAMUL® 8852 commercialisé par la société CELANESE : émulsion aqueuse de polyacétate de vinyle ; poids moléculaire = 50000 ; teneur en matières solides : 50 %
▪ FILCO® 310 commercialisé par la société COIM : émulsion aqueuse de résine epoxy modifiée ; teneur en matières solides : 52 %
▪ EPIREZ® 3510 W60 commercialisée par la société HEXION : émulsion aqueuse de résine epoxy bisphénol A ; poids moléculaire < 700 ; teneur en matières solides : 62 %
▪ EPIREZ® 3515 W60 commercialisée par la société HEXION : émulsion aqueuse de résine copolymère de bisphénol A-4,4'-(1-méthyléthylidène) et de 2,2'-[(1-méthyléthylidène)bis(4,1-phénylène oxyméthylène)]-bis[oxirane] ; teneur en matières solides : 62 %
▪ NEOXIL® 962D commercialisé par la société DSM : émulsion aqueuse de résine epoxy ester de bas poids moléculaire (EEW 470-550 g/eq) ; teneur en matières solides : 40 %
▪ NEOXIL® 961D commercialisé par la société DSM : émulsion aqueuse de résine epoxy ester de haut poids moléculaire (EEW 3500-6000 g/eq) ; teneur en matières solides : 30 %
▪ PEG 20000 commercialisé par la société CLARIANT : polyéthylèneglycol ; poids moléculaire 20000
▪ NAXOL® SH 2500 commercialisé par la société SCOTT BADER : polyadipate d'éthylène glycol ; teneur en matières solides : 100 %

### - agents texturants

▪ KELZAN® commercialisé par la société KELCO : xanthane
▪ RHODOPOL® 23 commercialisé par la société RHODIA : xanthane
▪ RHEOZAN® SH commercialisé par la société RHODIA : succinoglycan

### - agents de couplage

▪ SILQUEST® A-174 commercialisé par la société GE SILICONES : gamma-méthacryloxypropyltriméthoxysilane
▪ SILQUEST® A-1100 commercialisé par la société GE SILICONES : gamma-aminopropyltriéthoxysilane
▪ SILQUEST® A-1128 commercialisé par la société GE SILICONES : benzylaminoéthyl-gamma-aminopropyltriméthoxysilane (50 % en poids dans le méthanol)
▪ SILQUEST® A-1120 commercialisé par la société GE SILICONES : béta-aminoéthyl-gamma-aminopropyltriméthoxysilane
▪ SILQUEST® A-1387 commercialisé par la société GE SILICONES : polysilazane (50 % en poids dans le méthanol)
▪ SILQUEST® A-187 commercialisé par la société GE SILICONES: gamma-glycidoxypropyltriméthoxysilane

### - agents dispersants, agents lubrifiants et agents plastifiants

▪ PEG 2000 commercialisé par la société CLARIANT : polyéthylèneglycol ; poids moléculaire 2000
▪ PEG 300 commercialisé par la société CLARIANT : polyéthylèneglycol ; poids moléculaire 300
▪ CARBOWAX® 1000 commercialisé par la société UNION CARBIDE : polyéthylèneglycol ; poids moléculaire 1000
▪ LUTENSOL® AT 50 commercialisé par la société BASF : alcools gras C₁₆-C₁₈ ; 50 OE
▪ ANTISTATICO® KN commercialisé par la société SIGMA-ALDRICH : stéaramidopropyl-diméthyl-bétahydroxyéthyl ammonium nitrate
▪ K-FLEX® 500 commercialisé par la société NOVEON : dibenzoate de diéthylène-dipropylèneglycol ; teneur en matières solides : 100 %
▪ SETILON® KN commercialisé par la société COGNIS : alcools gras C₈-C₂₂ éthoxylés ; teneur en matières solides : 57 %
▪ TEXLUBE® NI/CS2 commercialisé par la société ACHITEX : mélange d'alcools ethoxylés et d'esters de glycérol ; teneur en matières solides : 100 %
▪ LUBRONYL® GF commercialisé par la société KEMIRA CHIMIE : mélange d'amines grasses C₁₆-C₁₈ éthoxylées et de distillats de pétrole de type alkylbenzène
▪ EMEREST® 2856 A commercialisé par la société COGNIS : acide pélargonique étholylé ; 10 OE
▪ CITROFLEX® B6 commercialisé par la société MORFLEX : n-butyryl-tri-n-hexyl-citrate

### - catalyseurs/lubrifiants

▪ EMERY® 6717L commercialisé par la société COGNIS : polyamides d'acide acétique, d'acides carboxyliques en C₅-C₉ et de diéthylènetriamine-éthylènimide
▪ EMERY® 6760 commercialisé par la société COGNIS : polyamides d'acide acétique, d'acides carboxyliques en C₅-C₉ et de diéthylènetriamine-éthylènimide ; teneur en matières solides : 50 %
▪ NEOXIL® AO 83634 commercialisé par la société DSM : alkyl(C₁₆-C₁₈)-imidazolinium éthosulfate ; teneur en matières solides : 100 %

### - agent de contrôle des groupes OH du polysaccharide

▪ RHODOCOAT® WT 1000 commercialisé par la société RHODIA : émulsion aqueuse de polyisocyanate aliphatique bloqué par la 2-butanone oxime ; teneur en matières solides : 63 %

### 3 - viscosité

Elle est mesurée au moyen d'un viscosimètre BROOKFIELD LVF équipé d'un mobile de type LV dans les conditions suivantes : on plonge le mobile dans 500 g de la composition d'ensimage contenue dans un récipient cylindrique de 9 cm de diamètre, on fait tourner le mobile à la vitesse appropriée (par exemple un mobile n°2 tournant à 60 rpm permet de mesurer une viscosité jusqu'à 500 mPa.s) pendant 1 minute, et on mesure la viscosité. La viscosité est mesurée à 25°C et elle est exprimée en mPa.s,.

La valeur mesurée ne correspond pas à la valeur absolue de la viscosité ; les valeurs mesurées peuvent être comparées entre elles.

### Fils de verre

### 1 - perte au feu

Elle est mesurée selon la norme ISO 1887 et est exprimée en %.

### 2 - quantité de bourre

La quantité de bourre permet d'apprécier la résistance à l'abrasion d'un fil. Elle est mesurée en pesant la quantité de matière qui se détache du fil après passage de celui-ci sur une série de 4 ou 6 embarrages cylindriques en céramique disposés de telle sorte que l'angle de déviation du fil au niveau de chaque embarrage soit égal à 90°. La quantité de bourre est donnée en mg pour 1 kg de fil testé.

### 3 - ténacité du fil

Elle est évaluée par mesure de la force de rupture en traction dans les conditions définies par la norme ISO 3341. Elle est exprimée en N/tex.

### 4 - migration

Elle est évaluée par le rapport R de la teneur maximale de l'ensimage mesuré sur le fil dans le stratifil au taux nominal de l'ensimage. Un rapport R est acceptable s'il est au plus égal à 2.

On indique aussi la longueur de fil L déroulé à partir du roving nécessaire pour atteindre un rapport R égal à 2, cette longueur correspondant à l' « épluchage » du stratifil. Elle est exprimée en mètre.

### EXEMPLES 1 A 16

Composition d'ensimage comprenant une résine epoxy pour le renforcement de résines thermodurcissables

On prépare des compositions d'ensimage comprenant les constituants figurant dans le tableau 1.

Les compositions d'ensimage sont appliquées au moyen d'un rouleau ensimeur « plein bain » sur des filaments de verre ayant un diamètre égal à 19 µm (Exemples 1 à 12) ou 13,6 µm (Exemples 13 à 16) qui sont rassemblés en fil bobiné sous forme d'un stratifil de masse égale à 7 kg. Le séchage du stratifil est effectué à 130°C pendant 15 heures (Exemples 1 à 13) et à 115°C pendant 15 heures puis 150°C pendant 5 heures (Exemple 14).

Les propriétés des compositions d'ensimage et des fils de verre sont données dans le tableau 1.

Les fils de verre selon les exemples 5, 7 et 9 sont utilisés pour former des plaques composites à fils parallèles dans les conditions de la norme ISO 9291 en utilisant les résines suivantes :
- Résine epoxy constituée de 100 parties en poids de résine Epoxy LY 564 (commercialisée par HUNSTMAN) et 96 parties en poids de durcisseur ARALDITE XB 3486 (commercialisé par HUNTSMAN).
- Résine polyester 1 : résine POLYTITE® 413-575 (commercialisée par REICHHOLD) constituée de 100 parties en poids de résine polyester orthophtalique modifiée et 1,5 partie en poids de peroxyde de méthyléthylcétone (BUTANOX® M50 commercialisé par AKZO NOBEL)
- Résine polyester 2 constiuée de 100 parties en poids de résine polyester insaturée isophtalique (SYNOLITE® 1717N1 commercialisée par DSM) et 1,5 partie en poids de peroxyde de méthylisobutyl cétone (TRIGONOX® HM commercialisé par AKZO NOBEL POLYMER CHEMICALS BV).

Les plaques sont traitées dans les conditions suivantes :

| | Température (°C) | Temps (heure) |
|---|---|---|
| Résine epoxy | 80 | 8 |
| Résine polyester 1 | 60 | 16 |
| Résine polyester 2 | 80 | 2 |
| | 120 | 4 |

Dans les plaques, on découpe des éprouvettes qui sont traitées pendant 72 heures (résine epoxy) ou 24 heures (résines polyester 1 et 2) dans de l'eau bouillante. Sur les éprouvettes, on mesure la contrainte en flexion 3 points dans le sens transverse et on calcule la contrainte pour une teneur en verre égale à 100 %. Le résultat des mesures est donné dans le Tableau 2.

### EXEMPLES 17 A 22

Composition d'ensimage comprenant un polyacétate de vinyle pour le renforcement de résines thermodurcissables

On prépare des compositions d'ensimage comprenant les constituants figurant dans le tableau 3.

Les compositions d'ensimage sont appliquées sur des filaments de verre ayant un diamètre de 19 µm (Exemples 17 à 19) et de 14 µm (Exemples 20 à 22) dans les conditions des exemples 1 à 16.

Les propriétés des compositions d'ensimage et des fils de verre sont données dans le tableau 3.

### EXEMPLES 23 A 28

Composition d'ensimage comprenant un epoxy polyester pour le renforcement de résines thermodurcissables

On prépare des compositions d'ensimage comprenant les constituants figurant dans le tableau 4.

Les compositions d'ensimage sont appliquées sur des filaments de verre ayant un diamètre de 19 µm (Exemples 23 à 25) et de 14 µm (Exemples 26 à 28) dans les conditions des exemples 1 à 16.

Les propriétés des compositions d'ensimage et des fils de verre sont données dans le tableau 4.

### EXEMPLES 29 A 31

Composition d'ensimage comprenant un polypropylène greffé par de l'anhydride maléique pour le renforcement de résines thermoplastiques.

On prépare des compositions d'ensimage comprenant les constituants figurant dans le tableau 5.

Les compositions d'ensimage sont appliquées sur des filaments de verre dans les conditions des exemples 1 à 16.

Les propriétés des compositions d'ensimage et des fils de verre sont données dans le tableau 5.

### EXEMPLES 32 A 34

Composition d'ensimage destinée à être appliquée sur des fils fins

On prépare des compositions d'ensimage comprenant les constituants figurant dans le tableau 6.

Les compositions d'ensimage sont appliquées dans les conditions des exemples 1 à 16 sur des filaments de verre de diamètre égal à 13,5 µm.
Les propriétés des compositions d'ensimage et des fils de verre sont données dans le tableau 6.

**Tableau 1**

| | Ex. 1 | Ex. 2 | Ex. 3 | Ex. 4(c) | Ex. 5 | Ex. 6(c) | Ex. 7 | Ex. 8(c) |
|---|---|---|---|---|---|---|---|---|
| Agent de couplage | | | | | | | | |
| Silquest® A 174 | 0,55 | 0,55 | 0,55 | 0,55 | 0,45 | 0,45 | 0,45 | 0,45 |
| Silquest® A 1387 | 0,20 | 0,20 | 0,20 | 0,20 | 0,20 | 0,20 | 0,20 | 0,20 |
| Silquest® A 187 | - | - | - | - | 0,20 | 0,20 | 0,20 | 0,20 |
| Silquest® A 1128 | - | - | - | - | - | - | - | - |

| Agent filmogène | | | | | | | | |
|---|---|---|---|---|---|---|---|---|
| Epirez® 3510 W60 | 4,00 | 4,00 | 4,00 | 4,00 | 4,00 | 4,00 | - | - |
| Epirez® 3515 W60 | - | - | - | - | - | - | 4,00 | 4,00 |
| Neoxil® 962D | 2,25 | 2,25 | 2,25 | 2,25 | 2,5 | 2,5 | 1,53 | 1,53 |
| Neoxil® 961D | - | - | - | - | - | - | 1,00 | 1,00 |

| Lubrifiant | | | | | | | | |
|---|---|---|---|---|---|---|---|---|
| Setilon® KN | 0,13 | 0,13 | 0,13 | 0,13 | 0,13 | 0,13 | 0,13 | 0,13 |
| Texlube® NI/CS2 | 0,32 | 0,32 | 0,32 | 0,32 | 0,44 | 0,44 | 0,22 | 0,22 |
| Neoxil® AO 83634 | - | - | - | - | 0,20 | 0,20 | 0,10 | 0,10 |

| Agent texturant | | | | | | | | |
|---|---|---|---|---|---|---|---|---|
| Rheozan® | - | 0,50 | - | - | 0,50 | - | 0,50 | - |
| Kelzan® | 0,50 | - | - | - | - | - | - | - |
| Rhodopol® | - | - | 0,50 | - | - | - | - | - |

| Composition | | | | | | | | |
|---|---|---|---|---|---|---|---|---|
| Viscosité (mPa.s) | n. d. | n. d. | 5 | n. d. | n. d. | 5 | 35 | 5 |

| Fil | | | | | | | | |
|---|---|---|---|---|---|---|---|---|
| Masse linéique (tex) | 618 | 625 | 661 | 638 | 600 | 574 | 559 | 596 |
| Perte au feu (%) | 0,63 | 0,59 | 0,55 | 0,54 | 0,54 | 0,55 | 0,71 | 0,61 |
| Bourre (mg/kg)/nombre embarrages | 183/4 | 5,6/4 | 53,2/4 | 26/4 | 29/6 | 9,2/6 | 13,8/6 | 49,6/6 |
| Ténacité (N/tex) | 0,23 | 0,36 | 0,29 | 0,49 | 0,42 | 0,46 | 0,43 | 0,43 |
| Migration | non | non | non | oui | non | oui | non | oui |
| R | - | - | - | n. d. | | 2,13 | - | 2,02 |
| L(m) | - | - | - | n. d. | | 300 | - | 100 |

| | Ex. 9 | Ex. 10(c) | Ex. 11 | Ex. 12(c) | Ex. 13 | Ex. 14 | Ex. 15 | Ex. 16(c) |
|---|---|---|---|---|---|---|---|---|
| Agent de couplage | | | | | | | | |
| Silquest®A174 | 0,55 | 0,55 | 0,45 | 0,45 | 0,55 | 0,55 | 0,55 | 0,55 |
| Silquest®A1387 | 0,15 | 0,15 | - | - | 0,20 | 0,20 | 0,20 | 0,20 |
| Silquest®A187 | 0,30 | 0,30 | 0,20 | 0,20 | - | - | - | - |
| Silquest®A1128 | - | - | 0,20 | 0,20 | - | - | - | - |

| Agent filmogène | | | | | | | | |
|---|---|---|---|---|---|---|---|---|
| Epirez® 3510 W60 | - | - | - | - | 4,00 | 4,00 | 4,00 | 4,00 |
| Epirez® 3515 W60 | 4,00 | 4,00 | 4,00 | 4,00 | - | - | - | - |
| Neoxil® 962D | 2,53 | 2,53 | 1,53 | 1,53 | 2,53 | 2,53 | 2,53 | 2,53 |
| Neoxil®961D | - | - | 1,00 | 1,00 | - | - | - | - |

| Lubrifiant | | | | | | | | |
|---|---|---|---|---|---|---|---|---|
| Setilon® KN | 0,13 | 0,13 | 0,13 | 0,13 | 0,13 | 0,13 | 0,13 | 0,13 |
| Texlube® NI/CS2 | 0,22 | 0,22 | 0,22 | 0,22 | 0,29 | 0,29 | 0,29 | 0,29 |
| Neoxil® AO 83634 | 0,10 | 0,10 | 0,10 | 0,10 | - | - | - | - |

| Agent texturant | | | | | | | | |
|---|---|---|---|---|---|---|---|---|
| Rheozan® | 0,50 | - | 0,43 | - | 0,50 | 0,50 | 0,50 | - |
| Kelzan® | - | - | - | - | - | - | - | - |
| Rhodopol® | - | - | - | - | - | - | - | - |

| Agent de contrôle des groupes OH | | | | | | | | |
|---|---|---|---|---|---|---|---|---|
| Rhodocoat® WT 1000 | - | - | - | - | - | 1,80 | - | - |
| Acide citrique | - | - | - | - | - | - | 0,50 | - |

| Composition | | | | | | | | |
|---|---|---|---|---|---|---|---|---|
| Viscosité (mPa.s) | 60 | 5 | 330 | 5 | 375 | 820 | 355 | 5 |
| Matières solides (%) | 4,81 | 4,31 | 4,53 | 4,10 | 4,38 | 4,40 | 4,25 | 4,42 |

| Fil | | | | | | | | |
|---|---|---|---|---|---|---|---|---|
| Masse linéique (tex) | 582 | 583 | 553 | 544 | 296 | 288 | 291 | 290 |
| Perte au feu (%) | 0,53 | 0,41 | 0,93 | 0,79 | 0,75 | 0,76 | 0,60 | 0,59 |
| Bourre (mg/kg)/nombre embarrages | 0,36/4 | 0,38/4 | 98,6/4 | 50,4/4 | 10,7/4 | 34,1/6 | 10,7/6 | 3,9/4 |
| Ténacité (N/tex) | 0,38 | 0,38 | 0,48 | 0,47 | 0,44 | 0,52 | 0,52 | 0,50 |
| Migration | non | oui | non | oui | non | non | non | oui |
| R | - | 2,35 | - | 2,67 | - | - | - | 2,60 |
| L(m) | - | 450 | - | 1050 | - | - | - | 950 |

| | | | | | | | | |
|---|---|---|---|---|---|---|---|---|
| n. d. : non déterminé ; (c) : comparatif | | | | | | | | |

**Tableau 2**

| | Ex. 5 | Ex. 6(c) | Ex. 7 | Ex. 8(c) | Ex. 9 | Ex. 10(c) |
|---|---|---|---|---|---|---|
| RESINE EPOXY | | | | | | |
| Contrainte 100 % verre (MPa) | | | | | | |
| Initiale | 1750 | 1860 | 1740 | 1820 | 1850 | 1800 |
| Après vieillissement | 1400 | 1460 | 1380 | 1300 | 1400 | 1350 |

| Contrainte sens transverse (MPa) | | | | | | |
|---|---|---|---|---|---|---|
| Initiale | 54 | 62 | 33 | 75 | 45 | 52 |
| Après vieillissement | 40 | 43 | 24 | 54 | 30 | 35 |

| RESINE POLYESTER 1 | | | | | | |
|---|---|---|---|---|---|---|
| Contrainte 100 % verre (MPa) | | | | | | |
| Initiale | 2430 | 2420 | 2360 | 2540 | n. d. | n. d. |
| Après vieillissement | 1750 | 1850 | 1900 | 1940 | n. d. | n. d. |

| Contrainte sens transverse (MPa) | | | | | | |
|---|---|---|---|---|---|---|
| Initiale | 54 | 60 | 53 | 63 | n. d. | n. d. |
| Après vieillissement | 30 | 47 | 32 | 43 | n. d. | n. d. |

| RESINE POLYESTER 2 | | | | | | |
|---|---|---|---|---|---|---|
| Contrainte 100 % verre (MPa) | | | | | | |
| Initiale | n. d. | n. d. | 2360 | 2700 | 2900 | 2800 |
| Après vieillissement | n. d. | n. d. | 2150 | 2108 | 2350 | 2200 |

| Contrainte sens transverse (MPa) | | | | | | |
|---|---|---|---|---|---|---|
| Initiale | n. d. | n. d. | 57 | 36 | 56 | 60 |
| Après vieillissement | n. d. | n. d. | 39 | 44 | 35 | 35 |

| | | | | | | |
|---|---|---|---|---|---|---|
| n. d. : non déterminé ; (c) : comparatif | | | | | | |

**Tableau 3**

| | Ex. 17 | Ex. 18 | Ex. 19(c) | Ex. 20 | Ex. 21 | Ex. 22(c) |
|---|---|---|---|---|---|---|
| Agent de couplage | | | | | | |
| Silquest® A174 | 0,29 | 0,29 | 0,29 | 0,29 | 0,29 | 0,29 |
| Silquest® A1100 | 0,19 | 0,19 | 0,19 | 0,19 | 0,19 | 0,19 |

| Agent filmogène | | | | | | |
|---|---|---|---|---|---|---|
| Vinamul® 8828 | 7,00 | 7,00 | 7,00 | 7,00 | 7,00 | 7,00 |
| Vinamul® 8852 | 3,58 | 3,58 | 3,58 | 3,58 | 3,58 | 3,58 |
| K Flex® 500 | 0,26 | 0,26 | 0,26 | 0,26 | 0,26 | 0,26 |

| Lubrifiant | | | | | | |
|---|---|---|---|---|---|---|
| Filco®310 | 2,40 | 2,40 | 2,40 | 2,40 | 2,40 | 2,40 |
| Emery®6760 | 0,58 | 0,58 | 0,58 | 0,58 | 0,58 | 0,58 |

| Agent texturant | | | | | | |
|---|---|---|---|---|---|---|
| Kelzan® | - | 0,5 | - | - | 0,7 | - |
| Rhodopol® | 0,5 | - | - | 0,5 | - | - |

| Composition | | | | | | |
|---|---|---|---|---|---|---|
| Viscosité (mPa.s) | 275 | 40 | 5 | 180 | 275 | 5 |
| Matières solides (%) | 8,41 | 8,41 | 7,91 | 8,41 | 8,41 | 7,94 |

| Fil | | | | | | |
|---|---|---|---|---|---|---|
| Masse linéique (tex) | 568 | 581 | 557 | 357 | 337,2 | 368,8 |
| Perte au feu (%) | 0,80 | 1,51 | 1,08 | 1,20 | 1,20 | 1,09 |
| Bourre (mg/kg)/nombre | 111,1/6 | 91,9/6 | 355,7/6 | 145/6 | 39,5/6 | 101,7/6 |
| embarrages | 0,46 | 0,58 | 0,6 | 0,54 | 0,63 | 3,3 |
| Ténacité (N/tex) | non | non | oui | non | non | oui |
| Migration (%) | - | - | 4,6 | - | - | 4,4 |
| R | - | - | 150 | - | - | 50 |
| L(m) | | | | | | |

| | | | | | | |
|---|---|---|---|---|---|---|
| (c) : comparatif | | | | | | |

**Tableau 4**

| | Ex. 23 | Ex. 24 | Ex. 25(c) | Ex. 26 | Ex. 27 | Ex. 28(c) |
|---|---|---|---|---|---|---|
| Agent de couplage | | | | | | |
| Silquest® A174 | 0,47 | 0,47 | 0,47 | 0,45 | 0,45 | 0,45 |
| Silquest® A1387 | 0,12 | 0,12 | 0,12 | 0,12 | 0,12 | 0,12 |
| Silquest® A187 | - | - | - | 0,20 | 0,20 | 0,20 |

| Agent filmogène | | | | | | |
|---|---|---|---|---|---|---|
| Carbowax® 1000 | 0,41 | 0,41 | 0,41 | 0,41 | 0,41 | 0,41 |
| PEG 20000 | 0,09 | 0,09 | 0,09 | - | - | - |
| Neoxil® 962D | 1,03 | 1,03 | 1,03 | 1,00 | 1,00 | 1,00 |
| Epirez® 3515 W60 | 1,54 | 1,54 | 1,54 | 2,50 | 2,50 | 2,50 |

| Lubrifiant | | | | | | |
|---|---|---|---|---|---|---|
| Emery® 6717L Lubronyl® GF | 0,03 | 0,03 | 0,03 | 0,32 | 0,32 | 0,32 |
| Emerest® 2856A | 0,25 | 0,25 | 0,25 | 0,25 | 0,25 | 0,25 |
| Citroflex® B6 | 0,78 | 0,78 | 0,78 | 0,50 | 0,50 | 0,50 |

| Agent texturant | 0,20 | 0,20 | 0,20 | - | - | - |
|---|---|---|---|---|---|---|
| Kelzan® | - | | - | - | | - |
| Rhodopol® | 0,45 | 0,50 - | - | 0,45 | 0,50 - | - |

| Composition | | | | | | |
|---|---|---|---|---|---|---|
| Viscosité (mPa.s) | 172,5 | 177,5 | 5 | 155 | 155 | 5 |
| Matières solides (%) | 4,12 | 4,17 | 3,67 | 5,36 | 5,41 | 4,91 |

| Fil | | | | | | |
|---|---|---|---|---|---|---|
| Masse linéique (tex) | 555 | 569 | 558 | 368 | 367 | 375 |
| Perte au feu (%) | 0,75 | 0,79 | 0,54 | 0,50 | 0,53 | 0,45 |
| Bourre (mg/kg)/nombre embarrages | 31,2/6 | 22,0/6 | 7,9/6 | 28,1/6 | 63,1/6 | 35,4/6 |
| Ténacité (N/tex) | 0,32 | 0,39 | 0,41 | 0,44 | 0,38 | 0,47 |
| Migration (%) | non | non | oui | non | non | oui |
| R | - | - | 7,8 | - | - | 6,4 |
| L (m) | - | - | 400 | - | - | 225 |

| | | | | | | |
|---|---|---|---|---|---|---|
| (c) : comparatif | | | | | | |

**Tableau 5**

| | Ex. 29 | Ex. 30 | Ex. 31(c) |
|---|---|---|---|
| Agent de couplage | | | |
| Silquest® A 1120 | 0,47 | 0,47 | 0,47 |

| Agent filmogène | | | |
|---|---|---|---|
| Lutensol® AT50 | 0,41 | 0,41 | 0,41 |

| Lubrifiant | | | |
|---|---|---|---|
| Polyfinish® 40H | 0,03 | 0,03 | 0,03 |
| Antistatico® KN | 0,25 | 0,25 | 0,25 |

| Agent texturant | | | |
|---|---|---|---|
| Rheozan® | 0,2 | - | - |
| Kelzan® | - | 0,3 | - |

| Composition | | | |
|---|---|---|---|
| Viscosité (mPa.s) | 207,5 | 190 | 5 |
| Matières solides (%) | 5,10 | 5,20 | 4,90 |

| Fil | | | |
|---|---|---|---|
| Masse linéique (tex) | 543 | 567 | 533 |
| Perte au feu (%) | 0,85 | 0,78 | 0,63 |
| Bourre (mg/kg)/nombre embarrages | 31,2/6 | 22,0/6 | 7,9/6 |
| Ténacité (N/tex) | 0,48 | 0,36 | 0,48 |
| Migration (%) | non | non | oui |
| R | - | - | 7,8 |
| L(m) | - | - | 400 |

| | | | |
|---|---|---|---|
| (c) : comparatif | | | |

**Tableau 6**

| | Ex. 32 | Ex. 33 | Ex. 34(c) |
|---|---|---|---|
| Agent de couplage | | | |
| Silquest® A174 | 0,25 | 0,25 | 0,25 |
| Silquest® A1128 | 0,50 | 0,50 | 0,50 |

| Agent filmogène | | | |
|---|---|---|---|
| AMP 90 | 0,25 | 0,25 | 0,25 |
| Naxol ® SH | 3,50 | 3,50 | 3,50 |
| PEG 2000 | 0,10 | 0,10 | 0,10 |
| PEG 300 | 0,05 | 0,05 | 0,05 |

| Agent lubrifiant | | | |
|---|---|---|---|
| Emery ® 6760 | 0,25 | 0,25 | 0,25 |

| Agent texturant | | | |
|---|---|---|---|
| Rheozan® | 0,4 | - | - |
| Rhodopol® | - | 0,4 | - |

| Composition | | | |
|---|---|---|---|
| Viscosité (mPa.s) | 335 | 1020 | 5 |
| Matières solides (%) | 4,91 | 4,91 | 4,5 |

| Fil | | | |
|---|---|---|---|
| Masse linéique (tex) | 306 | 284 | 305 |
| Perte au feu (%) | 0,83 | 0,88 | 0,89 |
| Bourre (mg/kg)/nombre embarrages | 3,3/4 | 1,7/4 | 1,5/4 |
| Ténacité (N/tex) | 0,38 | 0,38 | 0,40 |
| Migration (%) | non | non | oui |
| R | - | - | 6,3 |
| L(m) | - | - | 1100 |

| | | | |
|---|---|---|---|
| (c) : comparatif | | | |

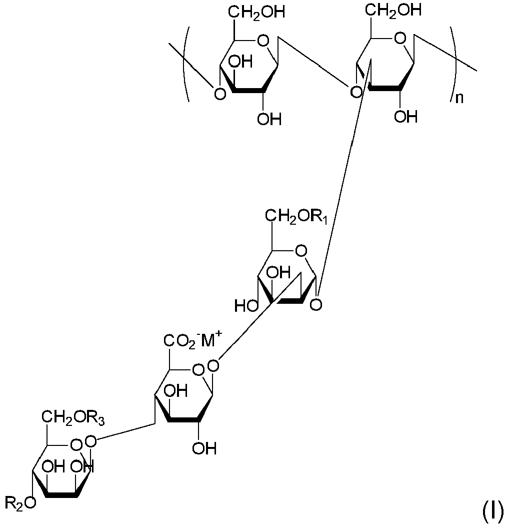

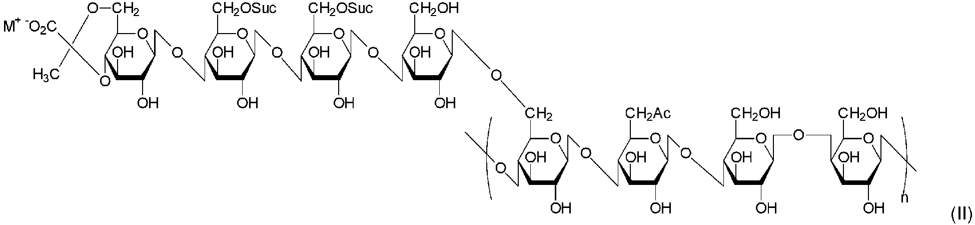

## Revendications

1. Composition aqueuse d'ensimage pour fils de verre, sous forme de gel physique, présentant une teneur en matières solides (extrait sec) variant de 5 à 10 % et comprenant (en % en poids) :
- 0,15 à 2 % d'au moins un agent texturant choisi parmi les xanthanes et les succinoglycans,
- 2 à 8 % d'au moins un agent filmogène choisi parmi les polyacétates de vinyle, les polyesters, les polyéthers, les epoxy, les polyacryliques et les polyuréthanes,
- 0,1 à 8 % d'au moins un composé choisi dans le groupe constitué par les agents plastifiants, les agents tensio-actifs et les agents dispersants,
- 0,1 à 4 % d'au moins un agent de couplage choisi parmi les composés hydrolysables appartenant au groupe constitué par les silanes, les titanates et les zirconates,
- 0 à 6 % d'au moins un additif.

2. Composition selon la revendication 1, **caractérisée en ce que** l'agent texturant présente un poids moléculaire moyen supérieur à 100000, de préférence inférieure à 10 x 10⁶ et avantageusement inférieur à 5 x 10⁶.

3. Composition selon l'une des revendications 1 ou 2, **caractérisée en ce que** le xanthane répond à la formule 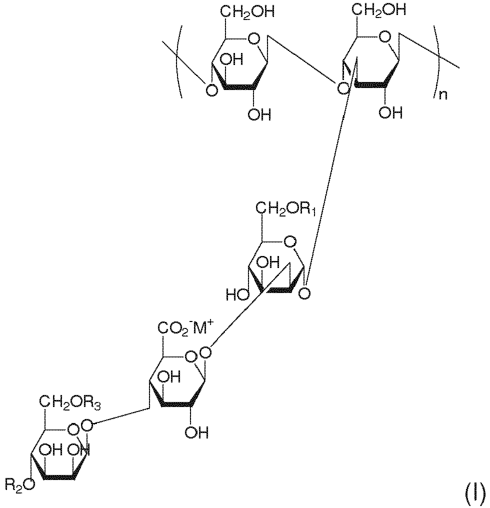 dans laquelle :
M⁺ = Na, K ou ½ Ca
R₁ = H ou - COCH₃
avec R₂, R₃ = H ou 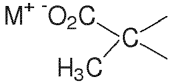 ou
R₂ = H et R₃ = -COCH₃
n ≥ 100.

4. Composition selon la revendication 1 ou 2, **caractérisée en ce que** le succinoglycan répond à la formule 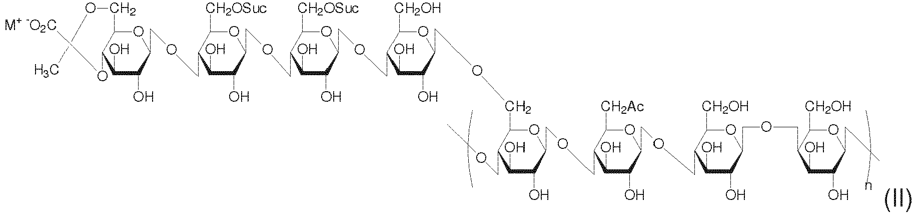 dans laquelle :
Ac = - CO - CH₃
Suc = - CO - (CH₂)₂ - COOH
M⁺ = Na, K ou ½ Ca
n ≥ 80.

5. Composition d'ensimage selon l'une des revendications 1 à 4, **caractérisée en ce que** la teneur en agent texturant est inférieure à 0,6 % en poids de la composition d'ensimage.

6. Composition d'ensimage selon la revendication 1, **caractérisée en ce que** l'agent filmogène est choisi parmi les polyacétates de vinyle, les epoxy et les polyéthylène glycols de masse supérieure ou égale à 20000.

7. Composition d'ensimage selon l'une des revendications 1 à 6, **caractérisée en ce que** la teneur en agent filmogène varie de 2,5 à 7 % en poids de la composition d'ensimage.

8. Composition d'ensimage selon l'une des revendications 1 à 7, **caractérisée en ce que** l'agent plastifiant, l'agent tensio-actif et l'agent dispersant sont choisis parmi les composés organiques, tels que les composés polyalkoxylés, aliphatiques ou aromatiques, éventuellement halogénés, les esters d'acide gras polyalkoxylés et les composés aminés, et les composés inorganiques, tels que les dérivés de la silice.

9. Composition d'ensimage selon l'une des revendications 1 à 8, **caractérisée en ce que** la teneur en agent plastifiant, agent tensio-actif et agent dispersant varie de 0,15 à 4 % en poids de la composition d'ensimage.

10. Composition d'ensimage selon l'une des revendications 1 à 9, **caractérisée en ce que** la quantité d'agent de couplage varie de 0,15 à 2 % en poids de la composition d'ensimage.

11. Composition d'ensimage selon l'une des revendications 1 à 10, **caractérisée en ce que** l'additif est un agent lubrifiant, un agent complexant, un dérivé de l'acide gallique ou phosphonique, un agent anti-mousse ou un acide.

12. Composition d'ensimage selon l'une des revendications 1 à 11, **caractérisée en ce qu'**elle comprend en outre un epoxy ou un isocyanate bloqué thermiquement activable, ou un acide organique présentant au moins deux groupes fonctionnels carboxyles.

13. Composition d'ensimage selon la revendication 12, **caractérisée en ce que** l'epoxy et l'isocyanate présentent un poids moléculaire inférieur à 1000, de préférence inférieur à 700.

14. Composition d'ensimage selon la revendication 12, **caractérisée en ce que** l'acide présente un poids moléculaire inférieur à 1000, de préférence inférieur à 500.

15. Composition d'ensimage selon l'une des revendications 1 à 14, **caractérisée en ce qu'**elle présente une teneur totale en additifs n'excédant pas 3 %.

16. Composition d'ensimage selon l'une des revendications 1 à 15, **caractérisée en ce qu'**elle présente une teneur en matières solides (extrait sec) variant de 3 à 15 %, de préférence 5 à 10 %.

17. Fil de verre revêtu de la composition d'ensimage selon l'une des revendications 1 à 16.

18. Fil de verre selon la revendication 17, **caractérisé en ce que** la quantité d'ensimage représente 0,2 à 5 % en poids du fil final, de préférence 0,35 à 3 %.

19. Matériau composite comprenant au moins une matière organique et/ou inorganique et des fils de verre, **caractérisé en ce que** les fils de verre sont constitués pour tout ou partie de fils de verre selon la revendication 17 ou 18.

20. Matériau selon la revendication 19, **caractérisé en ce que** le taux de verre est compris entre 5 et 60 %.

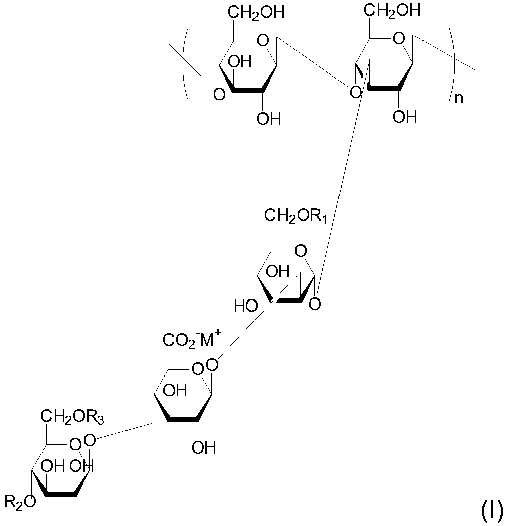

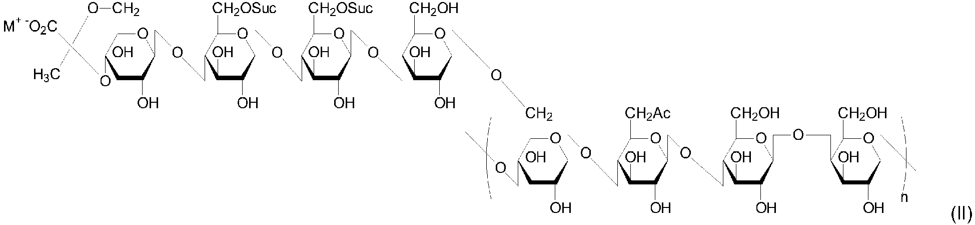

## Patentansprüche

1. Wässrige Schlichtezusammensetzung für Glasfasern in Form eines physikalischen Gels, das einen Feststoffgehalt (Trockenextrakt) aufweist, der von 5 bis 10 % variiert und Folgendes umfasst (in Gewichtsprozent):
- 0,15 bis 2 % mindestens eines Texturierungsmittels, ausgewählt aus Xanthanen und Succinoglykanen,
- 2 bis 8 % mindestens eines filmbildenden Mittels, ausgewählt aus Polyvinylacetaten, Polyestern, Polyethern, Epoxiden, Polyacrylaten und Polyurethanen,
- 0,1 bis 8 % mindestens einer Verbindung, ausgewählt aus der Gruppe bestehend aus Weichmachern, Tensiden und Dispergiermitteln,
- 0,1 bis 4 % mindestens eines Kupplungsmittels, ausgewählt aus hydrolysierbaren Verbindungen aus der Gruppe bestehend aus Silanen, Titanaten und Zirkonaten,
- 0 bis 6 % mindestens eines Additivs.

2. Zusammensetzung gemäß Anspruch 1, **dadurch gekennzeichnet, dass** das Texturierungsmittel ein mittleres Molekulargewicht größer als 100000, vorzugsweise weniger als 10x10⁶ und vorteilhafterweise weniger als 5x10⁶ aufweist.

3. Zusammensetzung gemäß einem der Ansprüche 1 oder 2, **dadurch gekennzeichnet, dass** das Xanthan der folgenden Formel entspricht 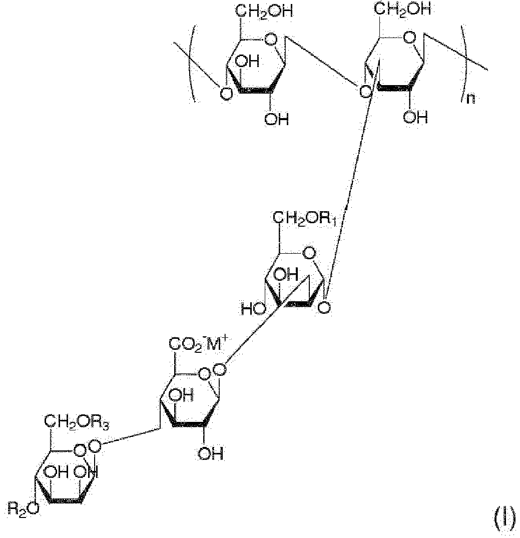 worin:
M⁺ = Na, K oder ½ Ca
R₁ = H oder -COCH₃
mit R₂, R₃ = H oder 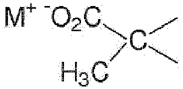 oder
R₂ = H und R₃ = -COCH₃
n ≥ 100.

4. Zusammensetzung gemäß Anspruch 1 oder 2, **dadurch gekennzeichnet, dass** das Succinoglykan der folgenden Formel entspricht 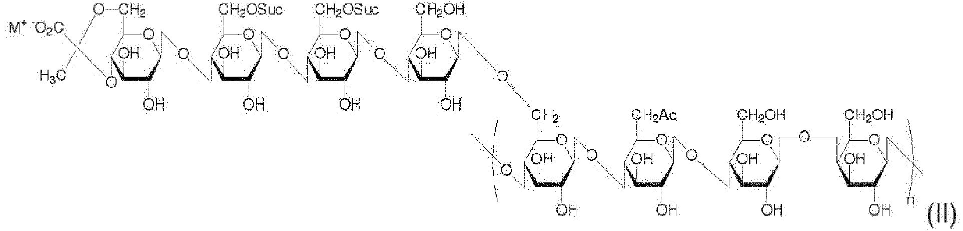 worin:
Ac = - CO - CH₃
Suc = - CO - (CH₂)₂ - COOH
M+ = Na, K oder ½ Ca
n ≥ 80.

5. Schlichtezusammensetzung gemäß einem der Ansprüche 1 bis 4, **dadurch gekennzeichnet, dass** der Gehalt an Texturierungsmittel weniger als 0,6 Gewichtsprozent der Schlichtezusammensetzung ist.

6. Schlichtezusammensetzung gemäß Anspruch 1, **dadurch gekennzeichnet, dass** der Filmbildner ausgewählt ist aus Polyvinylacetaten, Epoxiden und Polyethylenglykolen mit einer Masse größer als oder gleich wie 20000.

7. Schlichtezusammensetzung gemäß einem der Ansprüche 1 bis 6, **dadurch gekennzeichnet, dass** der Gehalt an Filmbildner 2,5 bis 7 Gewichtsprozent der Schlichtezusammensetzung ist.

8. Schlichtezusammensetzung gemäß einem der Ansprüche 1 bis 7, **dadurch gekennzeichnet, dass** der Weichmacher, das Tensid und das Dispergiermittel aus organischen Verbindungen, wie z. B. polyalkoxylierten, aliphatischen oder aromatischen, eventuell halogenierten Verbindungen, polyalkoxylierten Fettsäureestern und Aminoverbindungen, und anorganischen Verbindungen, wie z. B. Kieselsäurederivaten, ausgewählt sind.

9. Schlichtezusammensetzung gemäß einem der Ansprüche 1 bis 8, **dadurch gekennzeichnet, dass** der Gehalt an Weichmacher, Tensid und Dispergiermittel 0,15 bis 4 Gewichtsprozent der Schlichtezusammensetzung ist.

10. Schlichtezusammensetzung gemäß einem der Ansprüche 1 bis 9, **dadurch gekennzeichnet, dass** die Menge an Kupplungsmittel 0,15 bis 2 Gewichtsprozent der Schlichtezusammensetzung ist.

11. Schlichtezusammensetzung gemäß einem der Ansprüche 1 bis 10, **dadurch gekennzeichnet, dass** das Additiv ein Schmiermittel, ein Komplexbildner, ein Gallus- oder Phosphonsäurederivat, ein Antischaummittel oder eine Säure ist.

12. Schlichtezusammensetzung gemäß einem der Ansprüche 1 bis 11, **dadurch gekennzeichnet, dass** sie ferner ein thermisch aktivierbares blockiertes Epoxid oder Isocyanat oder eine organische Säure mit mindestens zwei funktionellen Carboxylgruppen umfasst.

13. Schlichtezusammensetzung gemäß Anspruch 12, **dadurch gekennzeichnet, dass** das Epoxid und das Isocyanat ein Molekulargewicht von weniger als 1000, vorzugsweise weniger als 700, aufweisen.

14. Schlichtezusammensetzung gemäß Anspruch 12, **dadurch gekennzeichnet, dass** die Säure ein Molekulargewicht von weniger als 1000, vorzugsweise weniger als 500, aufweist.

15. Schlichtezusammensetzung gemäßeinem der Ansprüche 1 bis 14, **dadurch gekennzeichnet, dass** sie einen Gesamtgehalt an Additiven von nicht mehr als 3 % aufweist.

16. Schlichtezusammensetzung gemäß einem der Ansprüche 1 bis 15, **dadurch gekennzeichnet, dass** sie einen Feststoffgehalt (Trockensubstanz) aufweist, der von 3 bis 15 %, vorzugsweise 5 bis 10 %, variiert.

17. Glasfaser, beschichtet mit der Schlichtezusammensetzung gemäß einem der Ansprüche 1 bis 16.

18. Glasfaser gemäß Anspruch 17, **dadurch gekennzeichnet, dass** die Menge an Schlichte 0,2 bis 5 Gewichtsprozent der Endfaser, vorzugsweise 0,35 bis 3 %, darstellt.

19. Verbundmaterial, umfassend mindestens ein organisches und/oder anorganisches Material und Glasfäden, **dadurch gekennzeichnet, dass** die Glasfäden ganz oder teilweise aus Glasfasern gemäß Anspruch 17 oder 18 bestehen.

20. Material gemäß Anspruch 19, **dadurch gekennzeichnet, dass** der Glasgehalt zwischen 5 und 60 % liegt.

## Claims

1. Aqueous sizing composition for glass fibres, in the form of a physical gel, presenting a solids content (dry extract) varying from 5% to 10% and comprising (in % by weight):
- 0.15% to 2% of at least one texturising agent selected from among the xanthans and succinoglycans,
- 2% to 8% of at least one film-forming agent selected from among the polyvinyl acetates, polyesters, polyethers, epoxies, polyacrylics and polyurethanes,
- 0.1% to 8% of at least one component selected from the group made up of plasticising agents, surfactants and dispersing agents,
- 0.1% to 4% of at least one coupling agent selected from among the hydrolysable compounds of the group made up of silanes, titanates and zirconates,
- 0% to 6% of at least one additive.

2. Composition according to claim 1, **characterised in that** the texturising agent has an average molecular weight greater than 100000, preferably lower than 10 x 10⁶ and advantageously lower than 5 x 10⁶.

3. Composition according to either claim 1 or 2, **characterised in that** the xanthane has the formula 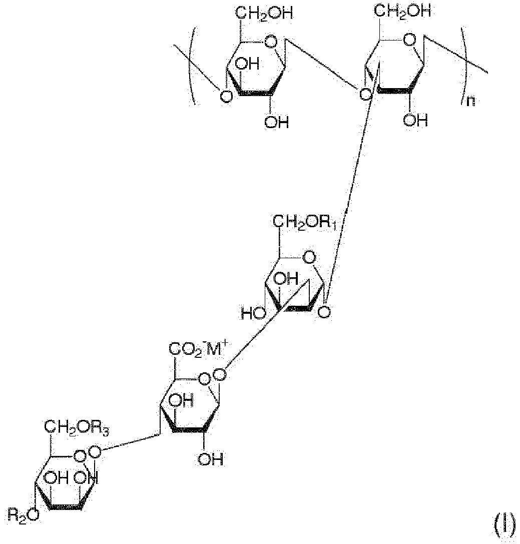 where:
M⁺ = Na, K or ½ Ca
R₁ = H or - COCH₃
with R₂, R₃ = H or 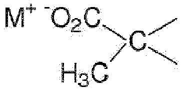 or
R₂ = H and R₃ = -COCH₃
n ≥ 100.

4. Composition according to either claim 1 or 2, **characterised in that** the succinoglycan has the formula 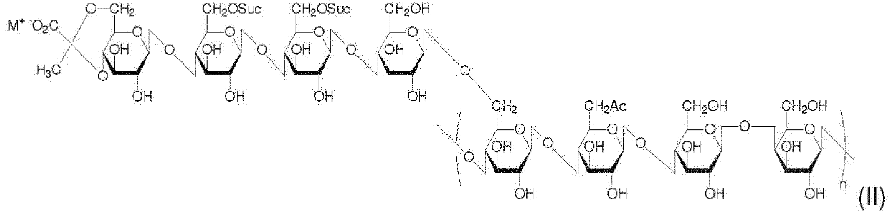 where:
Ac = - CO - CH₃
Suc = - CO - (CH₂)₂ - COOH
M⁺ = Na, K or ½ Ca
n ≥ 80.

5. Sizing composition according to any of claims 1 to 4, **characterised in that** the texturising agent content is less than 0.6% by weight of the sizing composition.

6. Sizing composition according to claim 1, **characterised in that** the film-forming agent is selected from among the polyvinyl acetates, epoxies and polyethylene glycols greater than or equal to 20000 in mass.

7. Sizing composition according to any of claims 1 to 6, **characterised in that** the film-forming agent content varies from 2.5% to 7% by weight of the sizing composition.

8. Sizing composition according to any of claims 1 to 7, **characterised in that** the plasticising agent, surfactant and dispersing agent are selected from among the organic compounds, such as polyalkoxylated, aliphatic or aromatic compounds, possibly halogenated, polyalkoxylated fatty acid esters and amino compounds, and inorganic compounds, such as silica derivatives.

9. Sizing composition according to any of claims 1 to 8, **characterised in that** the plasticising agent, surfactant and dispersing agent content varies from 0.15% to 4% by weight of the sizing composition.

10. Sizing composition according to any of claims 1 to 9, **characterised in that** the quantity of coupling agent varies from 0.15% to 2% by weight of the sizing composition.

11. Sizing composition according to any of claims 1 to 10, **characterised in that** the additive is a lubricant, a complexing agent, a derivative of gallic or phosphoric acid, an antifoam agent or an acid.

12. Sizing composition according to any of claims 1 to 11, **characterised in that** it also contains an epoxy or a thermally activatable blocked isocyanate, or an organic acid containing at least one functional carboxylic group.

13. Sizing composition according to claim 12, **characterised in that** the epoxy and isocyanate have a molecular weight below 1000, preferably below 700.

14. Sizing composition according to claim 12, **characterised in that** the acid has a molecular weight below 1000, preferably below 500.

15. Sizing composition according to any of claims 1 to 14, **characterised in that** it has a total additive content not exceeding 3%.

16. Sizing composition according to any of claims 1 to 15, **characterised in that** it has a solids content (dry extract) varying from 3% to 15%, preferably 5% to 10%.

17. Glass fibre coated with the sizing composition according to any of claims 1 to 16.

18. Glass fibre according to claim 17, **characterised in that** the quantity of sizing represents 0.2% to 5% by weight of the final fibre, preferably 0.35% to 3%.

19. Composite material containing at least one organic and/or inorganic material and glass fibres, **characterised in that** the glass fibres are made up partly or entirely of the glass fibres according to claim 17 or 18.

20. Material according to claim 19, **characterised in that** the glass content is between 5% and 60% inclusive.
